Europäisches Patentamt

European Patent Office

Office européen des brevets

(19)

(11) Numéro de publication: **0 027 399**
**A1**

(12) # DEMANDE DE BREVET EUROPEEN

(21) Numéro de dépôt: **80401362.1**

(22) Date de dépôt: **25.09.80**

(51) Int. Cl.³: **F 02 P 5/04**

(30) Priorité: **03.10.79 FR 7924586**

(43) Date de publication de la demande:
**22.04.81 Bulletin 81/16**

(84) Etats Contractants Désignés:
**DE GB IT SE**

(71) Demandeur: **DUCELLIER & Cie**
**Echat 950**
**F-94024 Creteil Cedex(FR)**

(72) Inventeur: **Marchal, Michel**
**25, rue Ronsard**
**F-91470 Limours(FR)**

(74) Mandataire: **Habert, Roger**
**Echat 950**
**F-94024 Creteil Cedex(FR)**

(54) **Dispositif de détection du cliquetis d'un moteur à combustion interne notamment pour véhicule automobile.**

(57) Ce dispositif est caractérisé en ce que le cliquetis est défini par sa durée à l'aide d'une horloge (6) dont les impulsions sont superposées à une tension analogique A représentative de la présence du cliquetis à l'aide d'une porte "ET" (7); et comptées en nombre binaire à l'aide d'un compteur (8) pendant la présence du cliquetis durant une période choisie, à la suite duquel un signal du dispositif d'allumage (9) commande la remise à zéro du compteur ainsi que le transfert du nombre binaire d'impulsions vers un circuit mémoire (10) qui le conserve fixe pendant une période jusqu'au signal suivant émis par le dispositif d'allumage, à la suite duquel ce nombre binaire fixe est transformé à l'aide d'un convertisseur (14) en une tension analogique de niveau représentatif du temps de présence du cliquetis.

_ FIG. 2 _

Dispositif de détection du cliquetis d'un moteur à combustion interne, notamment pour véhicule automobile.

Dispositif de détection du cliquetis d'un moteur à combustion interne, notamment pour véhicule automobile, dispositif qui transforme la présence du cliquetis en un signal apte à agir sur le fonctionnement du système d'avance à l'allumage dudit moteur afin d'obtenir le réglage optimal dudit allumage.

Le cliquetis est un phénomène d'auto-inflammation du mélange carburé dans les moteurs à allumage commandé. Après l'étincelle, le front de ·flamme se propage à partir de la bougie, mais sous certaines conditions, un ou plusieurs autres foyers de combustion se déclarent dans la chambre de combustion. Ceci provoque de fortes pointes de pression localisées s'accompagnant de bruit métallique suivant la fréquence d'émission et allant jusqu'à la destruction d'organes du moteur.

Le bruit métallique causé par le cliquetis engendre des vibrations d'une fréquence voisine de 6 KHz.

Il est connu de corriger le moment de l'allumage du moteur en fonction de la présence ou non de cliquetis ; dans tous les dispositifs connus le cliquetis est défini soit par son intensité par rapport au bruit de fond normal de fonctionnement du moteur, soit simplement par son amplitude à une période bien définie par la position des pistons du moteur, notamment par rapport au point mort haut de la phase de combustion.

Dans le premier cas la définition du cliquetis évolue en fonction de l'âge du véhicule puisque le bruit de fond augmente, la précision d'un tel procédé diminue donc avec le vieillissement.

Dans le second cas il est nécessaire de repérer angulairement la position du villebrequin du moteur afin de délivrer un signal de validation.

Dans tous ces cas,même si un seul pic de vibrations correspondant au cliquetis apparoit, le dispositif agit sur la correction de l'allumage, or ce pic de vibrations, de faible durée, peut correspondre à la somme de deux vibration venant de divers éléments du moteur, l'amplitude seule ne donne donc pas un aspect complet de la détection du cliquetis.

La présente invention a pour but de remédier à ces inconvé -
nients et concerne à cet effet un dispositif de détection du cliquetis d'un moteur à combustion interne, notamment pour véhicule
automobile, dans lequel le signal issu d'un capteur de vibrations
tel qu'un accéléromètre, est transformé en une tension analogique
"A" fonction du cliquetis après filtrage, amplification et mise
en forme afin d'assurer la correction de l'avance de l'allumage dudit moteur en fonction du cliquetis, dispositif de détection caractérisé en ce qu'il comporte des moyens qui définissent le temps de
présence du cliquetis de façon à ce que l'avance à l'allumage ne
soit modifiée qu'au delà d'un temps de présence du cliquetis supérieur à un seuil de temps choisi.

La description qui va suivre en regard des schémas annexés fera
mieux comprendre comment l'invention peut être réalisée.

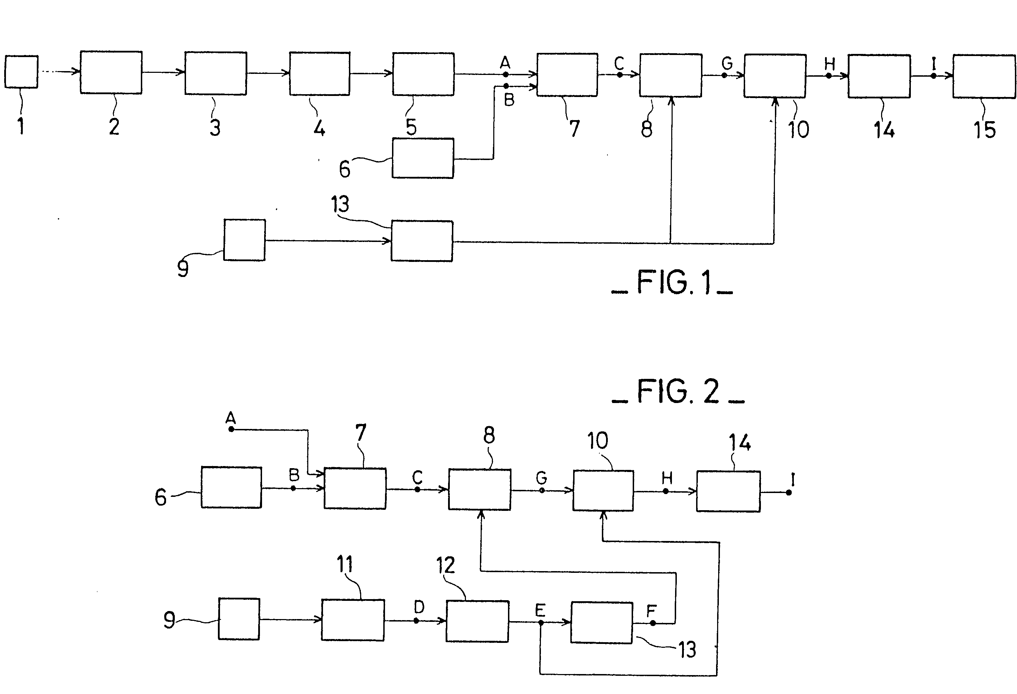

La figure 1 représente un schéma synoptique d'un dispositif
conforme à l'invention.

La figure 2 représente un schéma synoptique du circuit qui évalue le temps de présence du cliquetis.

La figure 3 est un diagramme des signaux apparaissant en divers
points du circuit schématisé à la figure 2.

De façon connue le signal issu d'un accéléromètre 1 disposé à
proximité du moteur à surveiller est mis en forme par un circuit analogique composé d'amplificateurs 2 et 4 et de filtre passe-bande 3,
puis d'un détecteur de seuil 5, à la sortie duquel est obtenue une
tension A logique telle par exemple une tension de sortie nulle en
présence du cliquetis, et une tension de sortie positive en absence
du cliquetis.

Conformément à l'invention à ce circuit analogique est associée
une horloge 6 dont les impulsions B sont superposées à la tension A
de sortie du détecteur 5 dans une porte "ET" 7. Les impulsions B,
lors de la présence du cliquetis sont comptées en binaire par un
compteur 8 pendant un cycle d'allumage, à la suite duquel un signal
de l'allumeur 9 commande la remise à zéro dudit compteur 8, et le
transfert du nombre total d'impulsions emmagasiné dans ce compteur 8
vers un circuit mémoire 10 dans lequel cette information binaire
est conservée pendant la période "T" de comptage suivant, cette information binaire H est ensuite transformée en une tension analogique I à l'aide d'un convertisseur 14, ceci se traduisant par une suite de tensions analogiques de niveau "I" représentatifs du temps de présence du cliquetis, lequel temps, s'il est supérieur à une valeur de seuil choisi, commande un dispositif 15 ne faisant pas partie de l'invention, ce dispositif assurant lui même la modification de l'avance du point d'allumage.

Les impulsions D fournies par l'allumage 9 sont utilisées pour le transfert des informations ainsi que pour la remise à zéro du compteur 8.

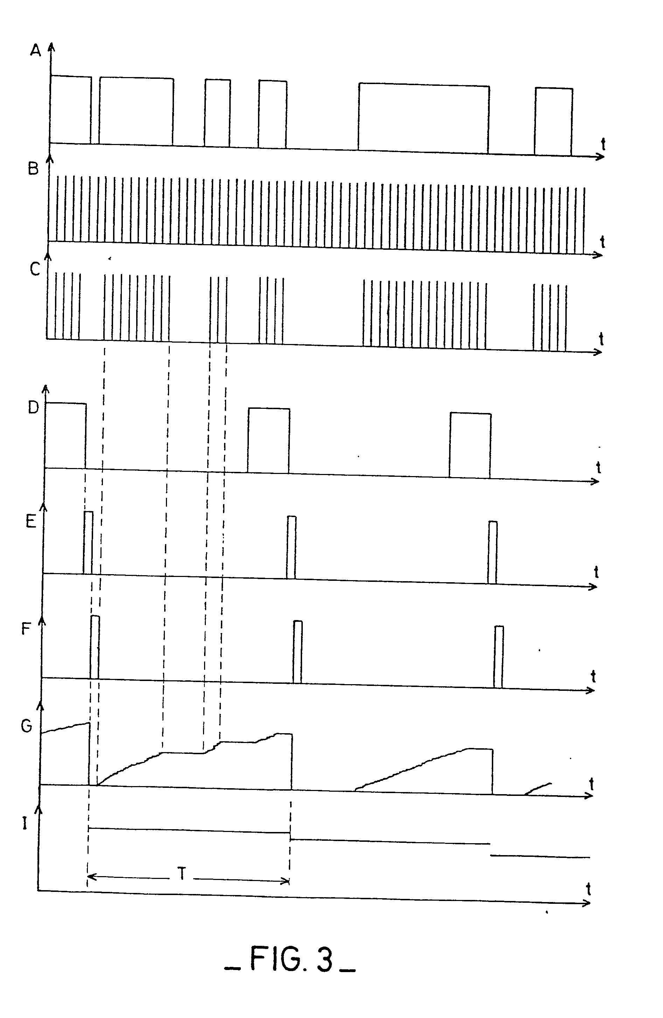

Etant donné la technologie actuelle des compteurs et des circuits mémoires, le transfert (début des courbes1fig. 3) est effectué à l'aide d'un élément 12, sur un front descendant (courbe E - fig. 3), alors que la remise à zéro (voir courbe G, fig. 3) est effectuée à l'aide d'un élément 13 sur un front montant (courbe F fig. 3). Un diviseur 11 est alors disposé entre l'allumage 9, et l'élément de transfert 12 de façon à augmenter la période d'allumage.

En effet, en prenant par exemple une vitesse de 2000 tr/mn, pour un moteur quatre temps, la période d'allumage est de 15ms. Ce temps est trop court pour obtenir en sortie d'un convertisseur 14 un signal exploitable, la période d'allumage est alors multipliée par 64 ou 128.

Il est évident que des modifications pourront être apportées à une telle réalisation sans sortir pour cela du cadre de l'invention.

Revendications

1 - Dispositif de détection du cliquetis d'un moteur à combustion interne, notamment pour véhicule automobile, dans lequel le signal issu d'un capteur de vibrations, tel qu'un accéléromètre, est transformé en une tension "A" fonction du cliquetis après filtrage, amplification et mise en forme afin d'assurer la correction de l'avance de l'allumage dudit moteur en fonction du cliquetis, dispositif de détection caractérisé en ce qu'il comporte des moyens qui définissent le temps de présence du cliquetis de façon à ce que l'avance à l'allumage ne soit modifiée qu'au delà d'un temps de présence du cliquetis supérieur à un seuil de temps choisi.

2 - Dispositif selon la revendication 1, caractérisé en ce que les moyens qui définissent le temps de présence du cliquetis sont constitués par une horloge (6) dont les impulsions "B" sont superposées à la tension "A" à l'aide d'une porte "ET" (7) et comptées en nombre binaire à l'aide d'un compteur (8) pendant la présence du cliquetis durant une période correspondant à au moins un cycle d'allumage déterminé, à la suite duquel un signal du dispositif d'allumage (9) commande la remise à zéro du compteur (8) ainsi que le transfert du nombre binaire d'impulsions emmagasiné dans ce compteur (8) vers un circuit mémoire (10) qui le conserve fixe pendant une période jusqu'au signal suivant, émis par le dispositif d'allumage (9), à la suite duquel ce nombre binaire d'impulsions est transformé, le cas échéant, à l'aide d'un convertisseur (14) en une tension analogique dont le niveau "I" est représentatif de la durée de présence du cliquetis.

_ FIG. 1 _

_ FIG. 2 _

0027399

_ FIG. 3 _

**Office européen des brevets**

**RAPPORT DE RECHERCHE EUROPEENNE**

Numéro de la demande

EP 80 40 1362

| | **DOCUMENTS CONSIDERES COMME PERTINENTS** | | **CLASSEMENT DE LA DEMANDE (Int. Cl. 3)** |
|---|---|---|---|
| **Catégorie** | Citation du document avec indication, en cas de besoin, des parties pertinentes | **Revendication concernée** | |
| | US - A - 4 002 155 (GENERAL MOTORS) | 1,2 | F 02 P 5/04 |
| | * colonne 1, ligne 23 à colonne 4, ligne 2; colonne 4, ligne 39 à colonne 6, ligne 59; colonne 7, ligne 32 à colonne 8, ligne 5; colonne 9, ligne 60 à colonne 17, ligne 38; figures 2 à 7 * | | |
| | --- | | |
| | FR - A - 2 274 796 (COMPAGNIE FRANCAISE DE RAFFINAGE) | 1,2 | |
| | * page 3, ligne 31 à page 4, ligne 10; ligne 34 à page 6, ligne 20; figures 1,2 * | | **DOMAINES TECHNIQUES RECHERCHES (Int. Cl. 3)** |
| | --- | | |
| | GB - A - 1 529 364 (NISSAN) | 1,2 | F 02 P<br>F 02 B<br>G 01 L |
| | * page 1, lignes 14-67; page 2, ligne 110 à page 3, ligne 102; page 5, ligne 33 à page 7, ligne 37; figures 7-9,14-21 * | | |
| | --- | | |
| E | DE - A - 2 848 596 (AUDI NSU AUTO UNION) | 1,2 | |
| | * page 1, alinéa 1 à page 2, alinéa 3; page 9, alinéa 2 à page 13, alinéa 1; figures 1-4 * | | |
| | --- | | **CATEGORIE DES DOCUMENTS CITES** |
| A | FR - A - 2 433 104 (ALFA ROMEAO) | 1 | X: particulièrement pertinent<br>A: arrière-plan technologique<br>O: divulgation non-ecrite |
| | * page 1, ligne 4 à page 3, ligne 8 * | | P: document intercalaire<br>T: théorie ou principe à la base de l'invention |
| | --- | | E: demande faisant interférence<br>D: document cité dans la demande |
| A | FR - A - 2 337 261 (INSTITUT FRANCAIS DU PETROLE) | 1,2 | L: document cite pour d'autres raisons |
| | * page 1, ligne 29 à page 2, ligne 5; page 2, ligne 18 à page 4, ligne 2; page 4, ligne 29 à page 8, ligne 6; figures 1,3,6 * | | &: membre de la même famille, document correspondant |

Le présent rapport de recherche a ete etabli pour toutes les revendications

| Lieu de la recherche | Date d'achevement de la recherche | Examinateur |
|---|---|---|
| La Haye | 09.01.1981 | KOOIJMAN |

OEB Form 1503.1  06.78